# EUROPEAN PATENT SPECIFICATION

(11) **EP 2 565 757 B1**
(45) Date of publication and mention of the grant of the patent: **09.03.2016**
(21) Application number: 11007080.2
(22) Date of filing: 31.08.2011
(51) Int. Cl.: G06F 3/044

(54) **Seamless capacitive touch panel**
Nahtloses kapazitives Touch-Panel
Panneau tactile capacitif sans soudure

(43) Date of publication of application: 06.03.2013
(73) Proprietor: Wistron Corporation, Hsichih, 22181 New Taipei City (TW)
(72) Inventor: Wang, Kuei-Ching, Hsichih, New Taipei City 22181 (TW); Lin, Hsing-Chiao, Hsichih, New Taipei City 22181 (TW)
(74) Representative: Becker Kurig Straus

(56) References cited:
- JP-A- 58 166 437
- US-A1- 2010 261 119
- US-A1- 2011 063 232
- US-B1- 7 030 860

## Description

The present invention relates to a seamless capacitive touch panel.

In recent years, mobile phones with touch panels have become more and more popular in the market. Therefore, more developers are developing various types of touch panels. Among those touch panels, capacitive touch panels have better endurance and feel, and have become the next generation of touch panels instead of resistive touch panels. However, the capacitive touch panel has higher cost, which is the main reason the capacitive touch panels have not enjoyed wider implementation in consumer products.

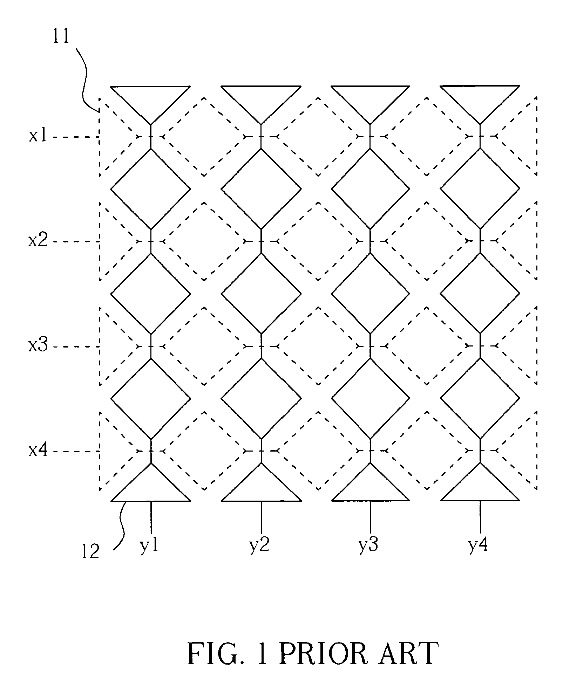

Please refer to FIG. 1, which is a diagram showing electrodes of a projected capacitive touch device of the prior art. The projected capacitive touch device senses a touched position by the two layers of the electrodes. The projected capacitive touch device comprises a substrate (not shown), such as a glass substrate. A cover layer (not shown) is arranged on the glass substrate. A Y-axis electrode layer 12 is arranged on an upper surface of the glass substrate. The Y-axis electrode layer 12 comprises a plurality of Y-axis electrodes y1, y2, y3, y4 separated from each other by a fixed distance. An X-axis electrode layer 11 is arranged on a lower surface of the glass substrate. The X-axis electrode layer 11 comprises a plurality of X-axis electrodes x1, x2, x3, x4 separated from each other by a fixed distance. The Y-axis electrodes y1, y2, y3, y4 are orthogonal to the X-axis electrodes x1, x2, x3, x4. When a finger touches or is close to the cover layer, a capacitance value between the X-axis electrode and the Y-axis electrode at the touched position changes. After sensing the change of the capacitance value by a sensing circuit, an X-axis coordinate and a Y-axis coordinate of the touched position can be determined. The above capacitive touch device needs the X-axis electrodes and the Y-axis electrodes to be arranged on the lower surface and the upper surface of the glass substrate respectively, or on a same surface of the glass substrate with an isolating layer to separate the X-axis electrodes from the Y-axis electrodes.

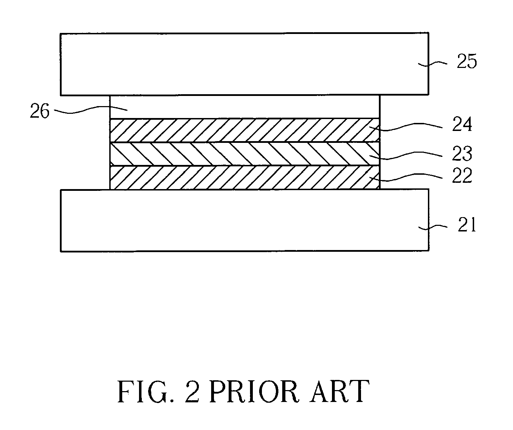

Please refer to FIG. 2, FIG. 2 is a cross-sectional view of a capacitive touch panel of the prior art. The capacitive touch panel comprises a transparent substrate 21 and a transparent cover plate 25. A lower transparent conductive layer 22, an isolating layer 23, and an upper transparent conductive layer 24 are sequentially formed on the transparent substrate 21. The transparent cover plate is bonded to the transparent substrate 21 by optical clear adhesive 26 to form the capacitive touch panel. As shown in FIG. 1, the capacitive touch panel comprises the X-axis electrodes and the Y-axis electrodes. The X-axis electrodes are formed at the lower transparent conductive layer 22, and the Y-axis electrodes are formed at the upper transparent conductive layer 24. However, the X-axis electrodes and the Y-axis electrodes are formed at different transparent conductive layers. When the X-axis electrodes and the Y-axis electrodes are not aligned properly, a thin line can be seen at a seam between the X-axis electrode and the Y-axis electrode, which affects image quality of a touch screen.

Note that, Document US 2010/261119 discloses forming a patterned layer having undercuts. However, the patterned layer is not used to separate the X-axis electrodes from the Y-axis electrodes for avoiding seams between the X-axis electrodes and the Y-axis electrodes, it is used to ensure that a conductive layer is only applied to those areas which will form bridges joining the Y-axis electrode segments.

This in mind, the present invention aims at providing a seamless capacitive touch panel for overcoming these problems.

This is achieved by a capacitive touch panel according to claim 1. The dependent claims pertain to corresponding further developments and improvements.

As will be seen more clearly from the detailed description following below, the claimed capacitive touch panel includes a substrate, a patterned layer formed on the substrate, a first electrode formed on the patterned layer, and a second electrode formed on the substrate, the second electrode and the first electrode are separated by the patterned layer for preventing conduction between the first and second electrodes.

In the following, the invention is further illustrated by way of example, taking reference to the accompanying drawings. Thereof
FIG. 1 is a diagram showing electrodes of a projected capacitive touch device of the prior art.
FIG. 2 is a cross-sectional view of a capacitive touch panel of the prior art.
FIG. 3 to FIG. 6 are diagrams illustrating a first embodiment of a capacitive touch panel of the present invention.
FIG. 7 is a cross-sectional view of a second embodiment of the capacitive touch panel of the present invention.
FIG. 8 is a cross-sectional view of a third embodiment of the capacitive touch panel of the present invention.

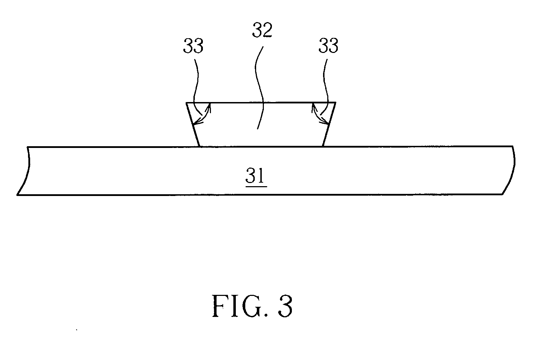

Please refer to FIG. 3 to FIG. 6. FIG. 3 to FIG. 6 illustrate a first embodiment of a capacitive touch panel of the present invention. The capacitive touch panel of the present invention comprises X-axis electrodes and Y-axis electrodes. One arrangement of the X-axis electrodes and Y-axis electrodes can be seen in FIG. 1. The capacitive touch panel of the present invention utilizes a patterned layer to separate electrodes in order to eliminate seams between electrodes, and further improve image quality of a touch screen.

As shown in FIG. 3, first, a layer of photoresist is applied on a substrate 31 (such as by spin-coat). The substrate 31 can be any kind of flexible substrate, or hard substrate such as a glass substrate, a plastic substrate, or a quartz substrate. In addition, the capacitive touch panel of the present invention can be integrated with a display panel to become a touch display panel. For example, the capacitive touch panel can be formed on the substrate 31. After finishing the capacitive touch panel, the capacitive touch panel can be attached to a display panel. Moreover, the capacitive touch panel and the display panel can share a same substrate, that is the substrate 31 can be a substrate of the display panel, such as a color filter glass substrate of the display panel. After forming the capacitive touch panel on the color filter glass substrate, the color filter glass substrate can be assembled with other parts to form the touch display panel. After applying the layer of photoresist to the substrate 31, a first mask is utilized to perform a photolithography processes on the photoresist layer, in order to form a patterned layer 32 for X-axis electrodes. The processes to form the patterned layer 32 comprise first forming the photoresist layer on the substrate 31, utilizing a mask (such as a gray scale mask, a halftone mask, or a phase shift mask) to perform an exposure process, and performing a development process on the photoresist layer to form the patterned layer 32 for X-axis electrodes. A step is formed between the patterned layer 32 for X-axis electrodes and the substrate 31. In a preferred embodiment, after the development process, undercuts are formed at edges of the patterned layer 32, which make an angle 33 of the edge less than 90 degrees.

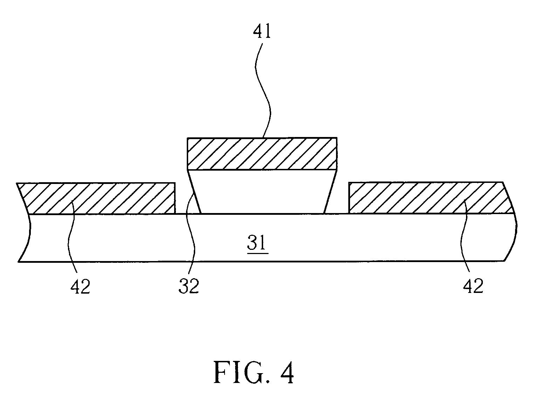

As shown in FIG. 4, a transparent conductive layer is deposited on the substrate 31 by surface application, sputter coating, evaporation coating, chemical vapor deposition, screen printing, or pad printing. The transparent conductive layer can be made of any kind of transparent conductive material such as indium tin oxide (ITO), antimony tin oxide (ATO), indium zinc oxide (IZO), aluminum zinc oxide (AZO), gallium zinc oxide (GZO), micaceous iron oxide (MIO), or metal oxide selected from titanium oxide, zinc oxide, zirconium oxide, antimony oxide, indium oxide, tin oxide, aluminum oxide, or silicon oxide. The transparent conductive layer can be formed by any thin film technique, such as physical vapor deposition or chemical vapor deposition. Due to the undercut and the step between the patterned layer 32 and the substrate 31, the transparent conductive layer formed on the patterned layer 32 and the transparent conductive layer formed on the substrate 31 are separated by the patterned layer 32. The transparent conductive layer formed on the patterned layer 32 further forms an X-axis electrode 41. The transparent conductive layer formed on the substrate 31 needs to have its connection cut in the X-axis direction to further form a Y-axis electrode 42. Therefore, a second mask is utilized to perform photolithography and etch processes in order to form the Y-axis electrode 42. The X-axis electrode 41 and the Y-axis electrode 42 are separated by the patterned layer 32 due to the undercut of the patterned layer 32.

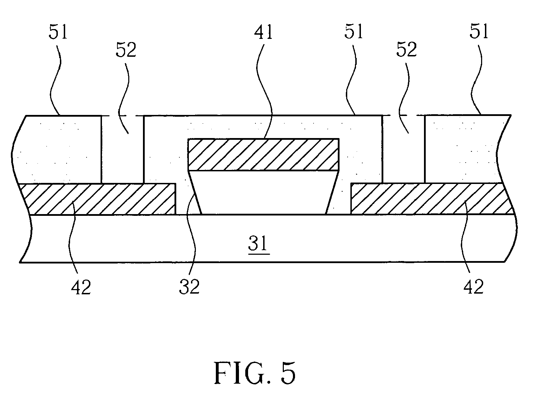

As shown in FIG. 5, an isolating layer 51 is formed on the X-axis electrode 41 and the Y-axis electrode 42. The X-axis electrode 41 and the Y-axis electrode 42 are separated by the patterned layer 32 for preventing conduction between the X-axis electrode 41 and the Y-axis electrode 42. A section of the Y-axis electrode 42 is also separated from another section of the Y-axis electrode 42 by the patterned layer 32. A third mask is utilized to perform photolithography and etch processes in order to form through holes 52 on the isolating layer 51, for electrically connecting the two sections of the Y-axis electrode 42.

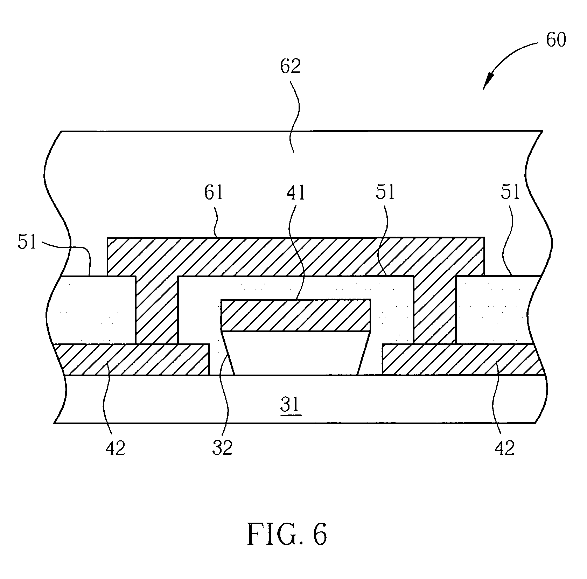

As shown in FIG. 6, a conductive layer 61 is formed on the isolating layer 51 for electrically connecting the two sections of the Y-axis electrode 42. Thereafter, a protection layer 62 is formed above. The conductive layer 61 can be a metal conductive layer. Because an area of a connection between the two sections of the Y-axis electrode 42 is small, the non-transparent metal conductive layer does not affect transmittance of the touch panel, and the metal conductive layer provides better conductivity. A fourth mask is utilized to perform photolithography and etch processes in order to form the conductive layer 61 for electrically connecting the two sections of the Y-axis electrode 42.

FIG. 6 is a diagram showing a structure of the first embodiment of the capacitive touch panel of the present invention. The capacitive touch panel comprises the substrate 31, the patterned layer 32, the X-axis electrode 41, the Y-axis electrode 42, the isolating layer 51, the conductive layer 61, and the protection layer 62. The X-axis electrode 41 of the present invention is formed on the patterned layer 32. The X-axis electrode 41 and the Y-axis electrode 42 are orthogonal to each other. The X-axis electrode 41 and the Y-axis electrode 42 are separated by the patterned layer 32 for preventing conduction between the X-axis electrode 41 and the Y-axis electrode 42. According to the above arrangement, there is no seam between the X-axis electrode 41 and the Y-axis electrode 42.

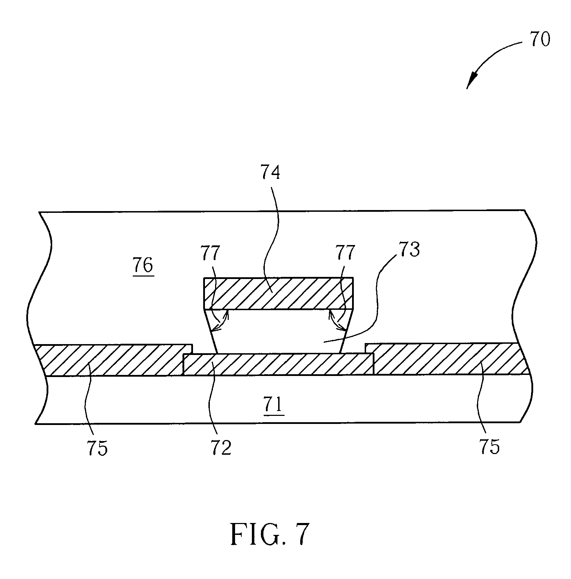

Please refer to FIG. 7, which is a cross-sectional view of a second embodiment of the capacitive touch panel of the present invention. The capacitive touch panel 70 comprises a substrate 71, a conductive layer 72, a patterned layer 73, an X-axis electrode 74, a Y-axis electrode 75, and a protection layer 76. In the second embodiment, the conductive layer 72 is formed on the substrate 71 for electrically connecting two sections of the Y-axis electrode 75. The conductive layer 72 is formed beneath the patterned layer 73, such that the isolating layer 51 and the through holes 52 in FIG. 6 are not necessary. Similarly, the X-axis electrode 74 is formed on the patterned layer 73 and the X-axis electrode 74 and the Y-axis electrode 75 are orthogonal to each other. Because there are undercuts formed at edges of the patterned layer 73, which make an angle 77 of the edge less than 90 degrees, the X-axis electrode 74 and the Y-axis electrode 75 are separated by the patterned layer 73 due to the undercuts, for preventing conduction between the X-axis electrode 74 and the Y-axis electrode 75. According to the above arrangement, there is no seam between the X-axis electrode 74 and the Y-axis electrode 75.

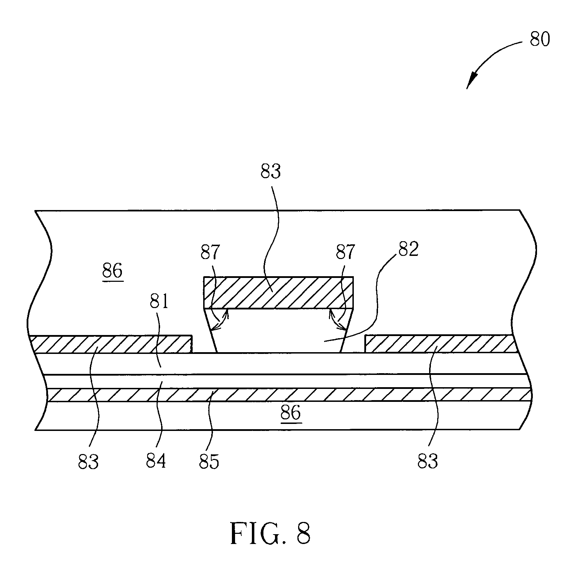

Please refer to FIG. 8, which is a cross-sectional view of a third embodiment of the capacitive touch panel of the present invention. The capacitive touch panel 80 comprises a substrate 81, an X-axis patterned layer 82, a plurality of X-axis electrodes 83, a Y-axis patterned layer 84, a plurality of Y-axis electrodes 85, and a protection layer 86. In the third embodiment, the X-axis electrode 83 and the Y-axis electrode 85 are formed on different surfaces of the substrate 81 respectively. The X-axis electrode 83 and the Y-axis electrode 85 are orthogonal to each other. Because there are undercuts formed at edges of the patterned layer 82, which make an angle 87 of the edge less than 90 degrees, the X-axis electrodes 83 formed on the patterned layer 82 are separated from the X-axis electrodes 83 formed on the substrate 81 by the patterned layer 82. Therefore, there is no seam between the X-axis electrodes 83. Similarly, the Y-axis electrodes 85 formed on the patterned layer 84 are separated from the Y-axis electrodes 85 formed on the substrate 81 by the patterned layer 84. Therefore, there is no seam between the Y-axis electrodes 85. In addition, a quantity of the X-axis electrodes 83 and the Y-axis electrodes 85 in FIG. 8 is twice a quantity of the X-axis electrodes 74 and the Y-axis electrodes 75 in FIG. 7, such that the capacitive touch panel 80 has higher resolution.

Summarizing the above, the capacitive touch panel of the present invention utilizes the patterned layer to separate the electrodes, such that there is no seam between the electrodes, and further improves image quality of the touch screen. The X-axis electrodes and the Y-axis electrodes can be installed on the same side or different sides of the substrate. When the X-axis electrodes and the Y-axis electrodes are installed on the same side of the substrate, the X-axis electrodes are formed on the patterned layer, such that the X-axis electrodes and the Y-axis electrodes are separated by the patterned layer for preventing conduction between the X-axis electrodes and the Y-axis electrodes. And there is no seam between the X-axis electrodes and the Y-axis electrodes. When the X-axis electrodes and the Y-axis electrodes are installed on different sides of the substrate, the X-axis electrodes and the Y-axis electrodes are separated from each other by the X-axis pattern layer and the Y-axis pattern layer respectively. Therefore, there is no seam between the X-axis electrodes and the Y-axis electrodes, and a quantity of the X-axis electrodes and the Y-axis electrodes is doubled to provide higher resolution.

## Claims

1. A capacitive touch panel (60, 70), comprising:
a substrate (31, 71);
a patterned layer (32, 73) formed on the substrate (31, 71);
a first electrode (41, 74) formed on the patterned layer (32, 73); and
a second electrode (42, 75) formed on the substrate (31, 71), wherein the second electrode (42, 75) and the first electrode (41, 74) are separated by the patterned layer (32, 73) for preventing conduction between the first electrode (41, 74) and second electrode (42, 75).

2. The capacitive touch panel of claim 1, **characterized in that** the patterned layer (32, 73) is made of photoresist.

3. The capacitive touch panel of claim 1, **characterized in that** undercuts are formed at edges of the patterned layer (32, 73).

4. The capacitive touch panel of claim 1, **characterized in that** the first and second electrodes (41, 42, 74, 75) are made of transparent conductive material consisting of indium tin oxide (ITO), antimony tin oxide (ATO), indium zinc oxide (IZO), aluminum zinc oxide (AZO), gallium zinc oxide (GZO), micaceous iron oxide (MIO), or metal oxide selected from titanium oxide, zinc oxide, zirconium oxide, antimony oxide, indium oxide, tin oxide, aluminum oxide, or silicon oxide.

5. The capacitive touch panel of claim 1, further **characterized by**:
an isolating layer (51) formed on the first electrode (41) and the second electrode (42); and
a conductive layer (61) formed on the isolating layer (51) for electrically connecting a section of the second electrode (42) to another section of the second electrode (42) separated by the patterned layer (32) via through holes (52) formed on the isolating layer (51).

6. The capacitive touch panel of claim 1, further **characterized by**:
a conductive layer (72) formed beneath the patterned layer (73) for electrically connecting a section of the second electrode (75) to another section of the second electrode (75) separated by the patterned layer (73).

7. The capacitive touch panel of claim 1, **characterized in that** the first electrode (41, 74) and the second electrode (42, 75) are orthogonal to each other.

8. A capacitive touch panel (80), comprising:
a substrate (81);
a first patterned layer (82) formed on a first surface of the substrate (81);
a plurality of first electrodes (83) formed on the first surface of the substrate (81) and the first patterned layer (82), wherein the first electrode (83) formed on the first surface of the substrate (81) and the first electrode (83) formed on the first patterned layer (82) are separated by the first pattern layer (82);
a second patterned layer (84) formed on a second surface of the substrate (81); and
a plurality of second electrodes (85) formed on the second surface of the substrate (81) and the second patterned layer (84), wherein the second electrode (85) formed on the second surface of the substrate (81) and the second electrode (85) formed on the second patterned layer (84) are separated by the second patterned layer (84).

9. The capacitive touch panel of claim 8, **characterized in that** the first and the second patterned layers (82, 84) are made of photoresist.

10. The capacitive touch panel of claim 8, **characterized in that** undercuts are formed at edges of the first and the second patterned layers (82, 84).

11. The capacitive touch panel of claim 8, **characterized in that** the first and second electrodes (83, 85) are made of transparent conductive material consisting of indium tin oxide (ITO), antimony tin oxide (ATO), indium zinc oxide (IZO), aluminum zinc oxide (AZO), gallium zinc oxide (GZO), micaceous iron oxide (MIO), or metal oxide selected from titanium oxide, zinc oxide, zirconium oxide, antimony oxide, indium oxide, tin oxide, aluminum oxide, or silicon oxide.

12. The capacitive touch panel of claim 8, **characterized in that** the first electrodes (83) and the second electrodes (85) are orthogonal to each other.

## Patentansprüche

1. Kapazitäts-Touchpanel (60, 70), welches umfasst:
ein Substrat (31, 71);
eine mit einem Muster versehene Schicht (32, 73), die auf dem Substrat (31, 71) ausgebildet ist;
eine erste Elektrode (41, 74), die auf der mit einem Muster versehenen Schicht (32, 73) ausgebildet ist; und
eine zweite Elektrode (42, 75), die auf dem Substrat (31, 71) ausgebildet ist, worin die zweite Elektrode (42, 75) und die erste Elektrode (41, 74) durch die mit einem Muster versehene Schicht (32, 73) getrennt sind, um eine Leitung zwischen der ersten Elektrode (41, 74) und der zweiten Elektrode (42, 75) zu verhindern.

2. Kapazitäts-Tauchpanel nach Anspruch 1, **dadurch gekennzeichnet, dass** die mit einem Muster versehene Schicht (32, 73) aus Photoresist besteht.

3. Kapazitäts-Touchpanel nach Anspruch 1, **dadurch gekennzeichnet, dass** an Kanten der mit einem Muster versehenen Schicht (32, 73) Unterätzungen ausgebildet sind.

4. Kapazitäts-Touchpanel nach Anspruch 1, **dadurch gekennzeichnet, dass** die erste und zweite Elektrode (41, 42, 74, 75) aus transparentem leitfähigem Material bestehend aus Indiumzinnoxid (ITO), Antimonzinnoxid (ATO), Indiumzinkoxid (IZO), Aluminium-zinkoxid (AZO), Galliumzinkoxid (GZO), Glimmereisenoxid (MIO), oder einem Metalloxid ausgewählt unter Titanoxid, Zinkoxid, Zirkonoxid, Antimonoxid, Indiumoxid Zinnoxid, Aluminiumoxid oder Siliziumoxid hergestellt sind.

5. Kapazitäts-Touchpanel nach Anspruch 1, weiter **gekennzeichnet durch**:
eine isolierende Schicht (51), die auf der ersten Elektrode (41) und der zweiten Elektrode ausgebildet ist; und
eine leitfähige Schicht (61), die auf der isolierenden Schicht (51) ausgebildet ist, um einen Bereich der zweiten Elektrode (42) mit einem anderen Bereich der zweiten Elektrode (42), die **durch** die mit einem Muster versehene Schicht (32) getrennt sind, über Durchgangslöcher (52), die auf der isolierenden Schicht (51) ausgebildet sind, elektrisch zu verbinden.

6. Kapazitäts-Touchpanel nach Anspruch 1, welches weiter **gekennzeichnet ist durch**:
eine leitfähige Schicht (72), die unter der mit einem Muster versehenen Schicht (73) ausgebildet ist, um einen Bereich der zweiten Elektrode (75) mit einem anderen Bereich der zweiten Elektrode (75), die **durch** die mit einem Muster versehene Schicht (73) getrennt sind, elektrisch zu verbinden.

7. Kapazitäts-Touchpanel nach Anspruch 1, **dadurch gekennzeichnet, dass** die erste Elektrode (41, 74) und die zweite Elektrode (42, 75) orthogonal zueinander stehen.

8. Kapazitäts-Touchpanel (80), welches umfasst:
ein Substrat (81);
eine erste mit einem Muster versehene Schicht (82), die auf einer ersten Oberfläche des Substrats (81) ausgebildet ist;
mehrere erste Elektroden (83), die auf der ersten Oberfläche des Substrats (81) und der ersten mit einem Muster versehenen Schicht (82) ausgebildet sind, worin die auf der ersten Oberfläche des Substrats (81) ausgebildete erste Elektrode (83) und die auf der ersten mit einem Muster versehenen Schicht (82) ausgebildete Elektrode (83) durch die erste mit einem Muster versehenen Schicht (82) getrennt sind;
eine zweite mit einem Muster versehenen Schicht (84), die auf einer zweiten Oberfläche des Substrats (81) ausgebildet ist; und
mehrere zweite Elektroden (85), die auf der zweiten Oberfläche des Substrats (81) und der zweiten mit einem Muster versehenen Schicht (84) ausgebildet sind, worin die auf der zweiten Oberfläche des Substrats (81) ausgebildete zweite Elektrode (85) und die auf der zweiten mit einem Muster versehenen Schicht (84) ausgebildete zweite Elektrode (85) durch die zweite mit einem Muster versehene Schicht (84) getrennt sind.

9. Kapazitäts-Touchpanel nach Anspruch 8, **dadurch gekennzeichnet, dass** die erste und die zweite mit einem Muster versehenen Schicht (82, 84) aus Photoresist bestehen.

10. Kapazitäts-Touchpanel nach Anspruch 8, **dadurch gekennzeichnet, dass** an Kanten der ersten und zweiten mit einem Muster versehenen Schicht (82, 84) Unterätzungen ausgebildet sind.

11. Kapazitäts-Touchpanel nach Anspruch 8, **dadurch gekennzeichnet, dass** die erste und zweite Elektrode (83, 85) aus transparentem leitfähigem Material bestehend aus Indiumzinnoxid (ITO), Antimonzinnoxid (ATO), Indiumzinkoxid (IZO), Aluminiumzinkoxid (AZO), Galliumzinkoxid (GZO), Glimmereisenoxid (MIO), oder einem Metalloxid ausgewählt unter Titanoxid, Zinkoxid, Zirkonoxid, Antimonoxid, Indiumoxid Zinnoxid, Aluminiumoxid oder Siliziumoxid hergestellt sind.

12. Kapazitäts-Touchpanel nach Anspruch 8, **dadurch gekennzeichnet, dass** die erste Elektrode (83) und die zweite Elektrode (85) orthogonal zueinander stehen.

## Revendications

1. Un panneau tactile capacitif (60, 70) comprenant :
- un substrat (31, 71) ;
- une couche imprimée (32, 73) formée sur le substrat (31, 71) ; une première électrode (41, 74) formée sur la couche imprimée (32, 73) ; et
- une seconde électrode (42, 75) formée sur le substrat (31,71), où la seconde électrode (42, 75) et la première électrode (41, 74) sont séparées par la couche imprimée (32, 73) afin d'empêcher la conduction entre la première électrode (41, 74) et la seconde électrode (42, 75) .

2. Le panneau tactile capacitif de la revendication 1, **caractérisé par le fait que** la couche imprimée (32, 73) est en photorésistant.

3. Le panneau tactile capacitif de la revendication 1, **caractérisé par le fait que** des rainures sont formées aux bords de la couche imprimée (32, 73).

4. Le panneau tactile capacitif de la revendication 1, **caractérisé par le fait que** la première et la seconde électrodes (41, 42, 74, 75) sont faites dans un matériau transparent conducteur tel qu'oxyde d'indium-étain (ITO), oxyde d'antimoine-étain (ATO), oxyde d'indium-zinc (IZO), oxyde d'aluminium-zinc (AZO), oxyde de gallium-zinc (GZO), oxyde de fer micacé (MIO) ou oxydes métalliques tels qu'oxyde de titane, oxyde de zinc, oxyde de zirconium, oxyde d'antimoine, oxyde d'indium, oxyde d'étain, oxyde d'aluminium, ou oxyde de silicone.

5. Le panneau tactile capacitif de la revendication 1, caractérisé ensuite par :
- une couche isolante (51) formée sur la première électrode (41) et la seconde électrode (42) ; et
- une couche conductrice (61) formée sur la couche isolante (51) pour connecter électriquement une section de la seconde électrode (42) et une section de la seconde électrode (42), séparées par la couche imprimée (32), moyennant des trous (52) formés sur la couche isolante (51).

6. Le panneau tactile capacitif de la revendication 1, caractérisé ensuite par :
- une couche conductrice (72) formée au-dessous de la couche imprimée (73) pour connecter électriquement une section de la seconde électrode (75) et une section de la seconde électrode (75), séparées par la couche imprimée (73).

7. Le panneau tactile capacitif de la revendication 1, **caractérisé par le fait que** la première électrode (41, 74) et la seconde électrode (42, 75) sont orthogonales entre elles.

8. Un panneau tactile capacitif (80), comprenant :
- un substrat (81) ;
- une première couche imprimée (82) formée sur une première surface du substrat (81) ;
- une série de premières électrodes (83) formée sur la première surface du substrat (81) et la première couche imprimée (82), où la première électrode (83) formée sur la première surface du substrat (81) et la première électrode (83) formée sur la première couche imprimée (82) sont séparées par la première couche imprimée (82) ;
- une seconde couche imprimée (84) formée sur une seconde surface du substrat (81) ; et
- une série de secondes électrodes (85) formées sur la seconde surface du substrat (81) et la seconde couche imprimée (84), où la seconde électrode (85) formée sur la seconde surface du substrat (81) et la seconde électrode (85) formée sur la seconde couche imprimée (84) sont séparées par la seconde couche imprimée (84).

9. Le panneau tactile capacitif de la revendication 8, **caractérisé par le fait que** la première et la seconde couches imprimée (82, 84) sont en photorésistant.

10. Le panneau tactile capacitif de la revendication 8, **caractérisé par le fait que** les rainures sont formées aux bords de la première et de la seconde couches imprimée (82, 84).

11. Le panneau tactile capacitif de la revendication 8, **caractérisé par le fait que** la première et la seconde électrodes (83, 85) sont faites dans un matériau transparent conducteur tel qu'oxyde d'indium-étain (ITO), oxyde d'antimoine-étain (ATO), oxyde d'indium-zinc (IZO), oxyde d'aluminium-zinc (AZO), oxyde de gallium-zinc (GZO), oxyde de fer micacé (MIO) ou oxydes métalliques tels qu'oxyde de titane, oxyde de zinc, oxyde de zirconium, oxyde d'antimoine, oxyde d'indium, oxyde d'étain, oxyde d'aluminium ou oxyde de silicone.

12. Le panneau tactile capacitif de la revendication 8, **caractérisé par le fait que** les premières électrodes (83) et les secondes électrodes (85) sont orthogonales entre elles.
